Europäisches Patentamt

European Patent Office

Office européen des brevets

(19)

(11) Publication number: **0 073 286**
**A1**

# EUROPEAN PATENT APPLICATION

(12)

(21) Application number: **81830249.9**

(22) Date of filing: **22.12.81**

(51) Int. Cl.³: **F 16 H 37/02**, B 60 K 17/08

(30) Priority: **11.08.81 IT 6811381**

(43) Date of publication of application: **09.03.83**
**Bulletin 83/10**

(84) Designated Contracting States: **AT BE CH DE FR GB IT LI LU NL SE**

(71) Applicant: **FIAT AUTO S.p.A., Corso Giovanni Agnelli 200, I-10135 Torino (IT)**

(72) Inventor: **Faizoni, Gianluigi, Via Malta 36 int. 010 B, I-10141 Torino (IT)**

(74) Representative: **Jacobacci, Filippo et al, c/o JACOBACCI-CASETTA & PERANI S.p.A. Via Alfieri 17, I-10121 Torino (IT)**

(54) **Variable speed transmission for motor vehicles.**

(57) The device for transmitting motion from the drive shaft (3), which is driven by the driving shaft (1), to the hollow main shaft (18), which is rotatably mounted on the drive shaft and carries an expandable driving pulley (19), uses an epiclyclic reversing unit (4).

The reversing unit (4) comprises an input sun wheel (5) carried by the drive shaft (3), an output sun wheel (17) carried by the main shaft (18), and a planet carrier (9) on which pairs of meshed planet wheels (13, 14) are rotatable. On wheel (13) of each pair meshes with the input sun wheel (5) and the other wheel (14) of each pair meshes with the output sun wheel (17). Two friction clutches (8, 10) are provided, serving respectively to render the planet carrier (9) rigid with the drive shaft (3) or the housing (12) of the reversing unit.

- 1 -

"Variable speed transmission for motor vehicles"

The present invention relates to a device for transmitting motion from the driving shaft to the axle shafts of the two driven wheels of a motor vehicle through a stepless speed variator with expandable pulleys, comprising:

- a drive shaft driven by the driving shaft:

- a hollow main shaft rotatably mounted on the drive shaft and carrying an expandable driving pulley;

- an epicyclic reversing unit for transmitting motion from the drive shaft to the main shaft under conditions of forward movement, idling, and rearward movement;

- a driven shaft carrying an expandable driven pulley which is driven by the driving pulley through a V-belt;

- hydraulic actuating means for controlling the expansion of the expandable driving and driven pulleys;

- a gear reduction unit driven by the driven shaft, and

- a differential gear driven by the gear reduction unit and driving the two axle shafts of the vehicle.

The object of the present invention is to provide a transmission device of the type specified above which is both simple to construct and has a much reduced size and limited weight.

In order to achieve this object, the present invention provides a transmission device of the aforesaid type, which is characterised in that the epicyclic reversing unit comprises:

- a fixed support structure;

- an input sun wheel carried by the drive shaft;

- an output sun wheel carried by the main shaft;

- a planet carrier;

- a plurality of pairs of meshed planet wheels rotatable on pins carried by the planet carrier, one wheel of each pair meshing with the input sun wheel and the other wheel of each pair meshing with the output sun wheel;

- a first hydraulically-operated friction clutch operable to render the planet carrier rigid with the drive shaft, and

- a second hydraulically-operated friction clutch operable to render the planet carrier rigid with the fixed support structure.

The presence of the two friction clutches allows the elimination of the hydraulic coupling normally present at the input of the variator in transmissions of this type, resulting in a considerable reduction in size, and reductions in weight and manufacturing costs.

Moreover, the type of epicyclic train used in the reversing unit according to the invention avoids the use of the internally-toothed annulus normally present in these units, which results in a considerable reduction in the manufacturing costs. Furthermore, the gears of the epiclyclic train used in the reversing unit according to the invention have low speeds of rotation, which allows high reliability to be achieved and reduces maintenance costs.

Further characteristics and advantages of the present invention will emerge from the following description, provided purely by way of non-limiting example, with reference to the appended drawings, in which:

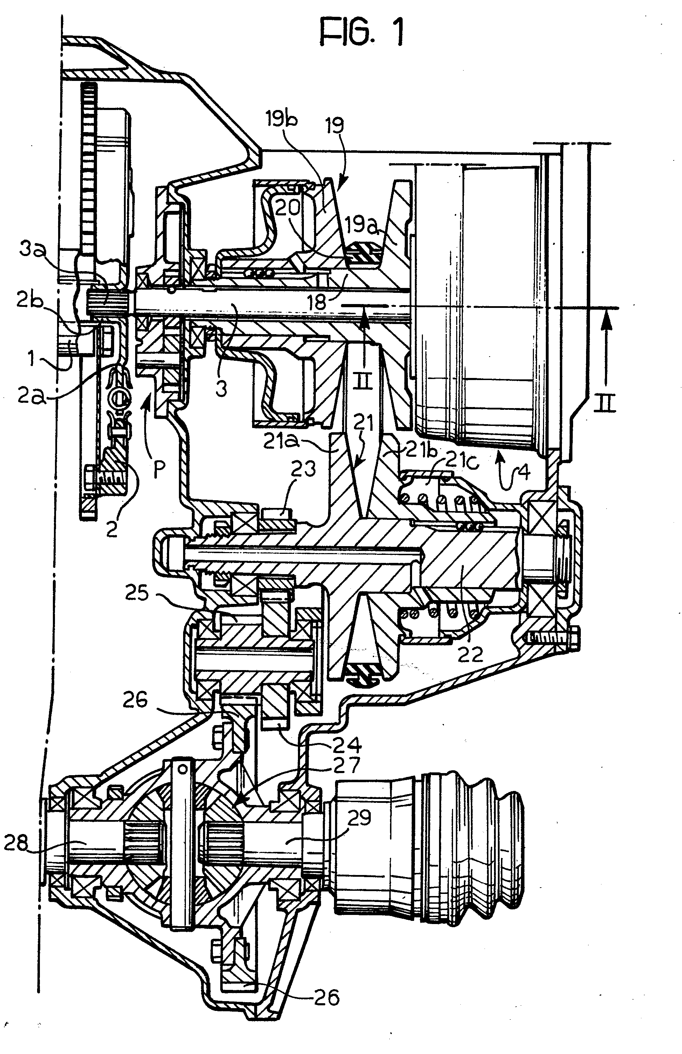

Figure 1 is a longitudinal axial section of a transmission device according to the invention,

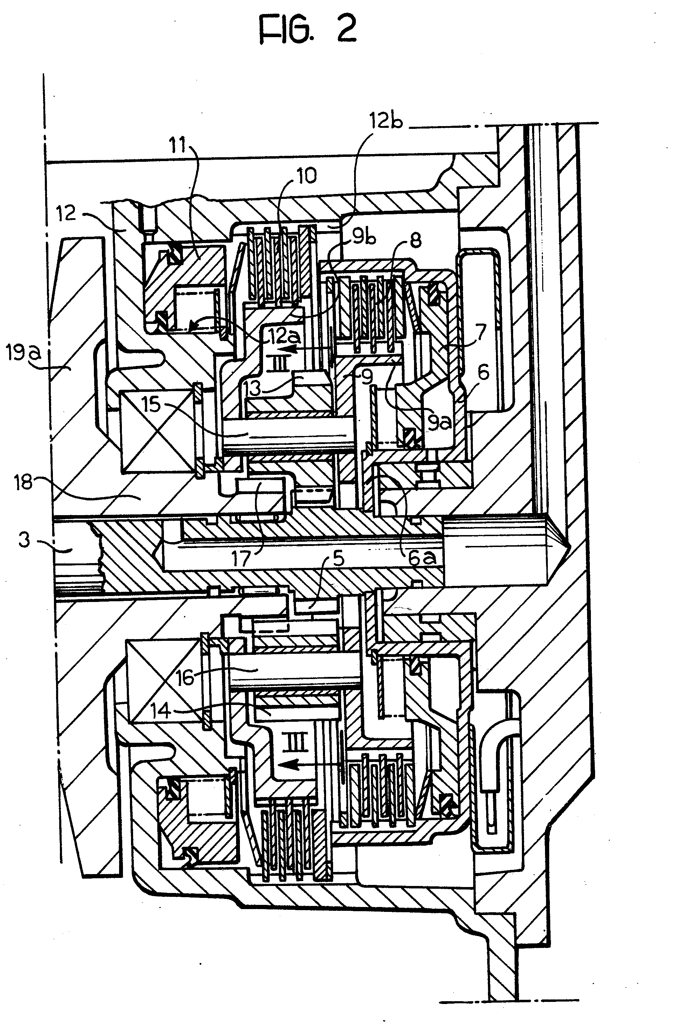

Figure 2 is a section on an enlarged scale along the line II-II in Figure 1, and

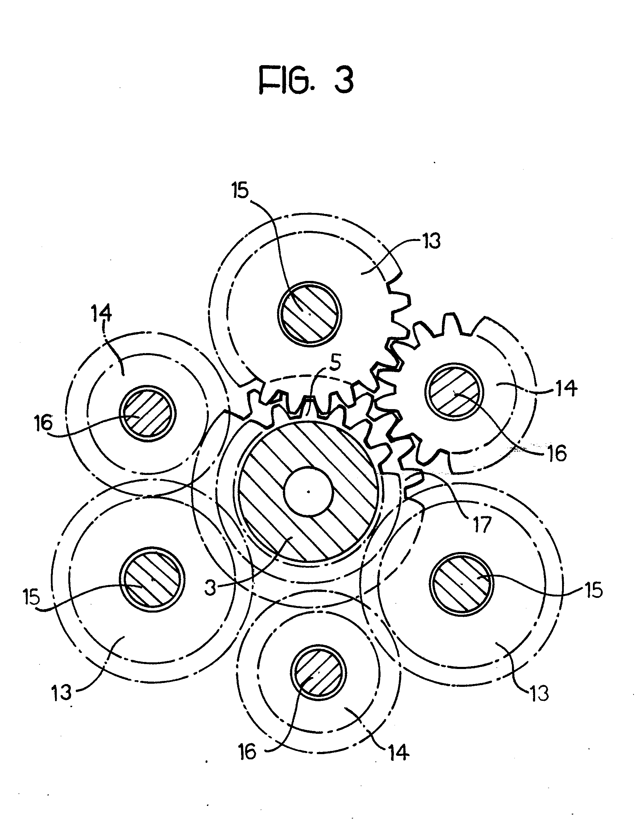

Figure 3 is a schematic illustration of the gears used in the epicyclic reversing unit according to the section line III-III in Figure 2.

Indicated by 1 is the end of the driving shaft of a motor vehicle, to which is fixed an annular flywheel 2 with an internally-disposed vibration damper 2a having an internally-splined hub 2b.

The splined end 3a of a drive shaft 3 which constitutes the input shaft of an epicyclic reversing unit, generally indicated 4, is engaged in the hub 2b.

The input sun wheel of the reversing unit is indicated 5, and is formed in one piece with the drive shaft 3.

To the end of the shaft 3 opposite the splined part 3a is fixed an annular element 6 which surrounds the shaft 3 coaxially and has a channel section with axially-extending sides. The annular element 6 has an annular appendage 6a which projects radially and is fixed to the shaft 3.

In the part adjacent its bottom, the annular element 6 forms an annular cylinder in which is slidable an annular piston 7 operated hydraulically by oil which is fed under pressure from a gear pump P driven by the shaft 3 near its splined end 3a.

The piston 7 operates a multiple-disc friction clutch 8.

The discs of the friction clutch 8 are interposed between the periphery of the outer wall of the annular element 6 and a first annular axial flange 9a of a planet carrier 9 which surrounds the shaft 3.

A second multiple-disc friction clutch 10 has discs which are interposed between a second annular axial flange 9b of the planet carrier 9 and a cylindrical part 12b forming part of the support structure 12 of the reversing unit 4.

The friction clutch 10 is operated by an annular control piston 11 which is slidably mounted in an annular cylinder 12a formed in the support structure 12.

The planet carrier 9 carries three pairs of meshed planet wheels 13, 14 which are rotatable on respective pins 15, 16.

One wheel 13 of each pair meshes with the input sun wheel 5, while the other wheel 14 meshes with the output sun wheel 17 formed in one piece with an end of a tubular main shaft 18 which is rotatably mounted on the drive shaft 3.

The main shaft 18 carries an expandable driving pulley 19 comprising a half pulley 19a formed in one piece with the shaft 18, and a half pulley 19b slidably keyed onto the shaft 18.

An hydraulic actuator 19c is operated in known manner by oil under pressure and is arranged to control the expansion of the pulley 19.

The pulley 19 transmits motion through a belt 20 to an expandable driven pulley 21 mounted on a driven shaft 22.

The pulley 21 comprises a half pulley 21a formed in one piece with the shaft 22 and a half pulley 21b slidably keyed onto the shaft 22. The expansion of the pulley 21 is controlled by an hydraulic actuator 21c.

The driven shaft 22 transmits motion through a gear reduction unit 23, 24, 25, 26 to a differential gear 27 which drives the two axle shafts 28, 29 of the two driven wheels of the motor vehicle.

The transmission described above operates as follows.

When the friction clutch 8 is operated by the piston 7, the planet carrier 9 is rendered rigid with the drive shaft 3, and hence with the input sun wheel 5, to achieve forward movement of the vehicle.

If, however, the friction clutch 10 is engaged by means of the piston 11, the planet carrier 9 is rendered rigid with the fixed support structure 12, thus achieving rearward movement.

When both the friction clutches 8, 10 are disengaged, the planet carrier 9 freewheels and motion is not transferred from the input sun wheel 5 to the output sun wheel 17 of the epicyclic train, thus achieving idling conditions.

The selective operation of the friction clutches 8, 10 is effected in known manner through control means, not shown, including a manual selector which controls a distributor governing the flow of oil supplied by the pump P to the two annular cylinders in which the pistons 7, 11 are movable.

CLAIMS:

1. Device for transmitting motion from the driving shaft to the axle shafts of the two driven wheels of a motor vehicle through a stepless speed variator with expandable pulleys, comprising:

- a drive shaft (3) driven by the driving shaft (1);

- a hollow main shaft (18) rotatably mounted on the drive shaft and carrying an expandable driving pulley (19);

- an epicyclic reversing unit (4) for selectively transmitting motion from the drive shaft (3) to the main shaft (18) in the conditions of forward movement, idling, and rearward movement;

- a driven shaft (22) carrying an expandable driven pulley (21) which is driven by the driving pulley (19) through a V-belt (20);

- hydraulic actuating means (7,11) for controlling the expansion of the expansible driving and driven pulleys (19, 21);

- a gear reduction unit (23, 24, 25, 26) driven by the driven shaft (22);

- a differential gear (27) driven by the gear reduction unit and driving the two axle shafts (28, 29) of the vehicle, characterised in that the epicyclic reversing unit comprises:

- a fixed support structure (12);

- an input sun wheel (5) carried by the drive shaft (3);

- an output sun wheel (17) carried by the main shaft (18);

- a planet carrier (9);

- a plurality of pairs of meshed planet wheels (13,14) rotatable on pins (15, 16) carried by the planet carrier (9), one wheel (13) of each pair meshing with the input sun wheel (5) and the other wheel (14) of each pair meshing with the output sun wheel (17);

- a first hydraulically-operated friction clutch (8) operable to render the planet carrier (9) rigid with the drive shaft (3), and

- a second hydraulically-operated friction clutch (10) operable to render the planet carrier (9) rigid with the fixed support structure (12).

2. Transmission device according to Claim 1, characterised in that the first friction clutch (8) is of the multiple-disc type and comprises a hollow annular element (6) which surrounds the drive shaft (3) coaxially and has a channel section with axially-extending sides, the annular element (6) having an annular appendage (6a) which projects radially and is fixed to the end of the drive shaft (3), and forming, in the part adjacent its bottom, an annular cylinder in which an hydraulically-operated annular control piston (7) is slidable, the discs of the friction clutch (8) being interposed between the peripheral part of the outer part of the annular element (6) and a first annular axial flange (9a) of the planet carrier (9).

3. Variator device according to Claim 1, characterised in that the second friction clutch (10) comprises an annular cylinder (12a) formed in a side wall of the support structure (12) and an annular control piston (11) slidable in the annular cylinder (12a), the discs of the friction clutch (10) being interposed between a cylindrical wall (12b) of the support structure (12) and a second annular axial flange (9b) of the planet carrier (9).

4. Variator device according to Claim 1, characterised in that the driving shaft (1) transmits motion to the drive shaft (3) through a flywheel (2) and a damper (2a).

FIG. 1

0073286

FIG. 2

FIG. 3

European Patent Office

# EUROPEAN SEARCH REPORT

0073286

Application number

EP 81 83 0249

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| Y | GB-A-1 290 666 (SELF-CHANGING GEARS) <br> * claims 1,6; figures 1-3 * | 1-5 | F 16 H 37/02 <br> B 60 K 17/08 |
| Y | GB-A-2 058 251 (BORG-WARNER) <br> * claims 1,6; figures 1-3 * | 1-5 | |
| Y | GB-A-2 058 250 (BORG-WARNER) <br> * page 2, lines 29-40; figure 2 * | 1-5 | |
| A | GB-A-2 039 640 (FIAT AUTO S.p.A.) <br> * claim 1; figure 1 * | 1 | |
| A | GB-A-2 064 683 (AISIN-WARNER K.K.) <br> * claims 1,4-6,10; figure 2 * | 1 | TECHNICAL FIELDS SEARCHED (Int. Cl. 3) |
| A | US-A-4 060 012 (D.GIACOSA) | | B 60 K 17/00 <br> F 16 H 3/00 <br> F 16 H 37/00 <br> F 16 H 47/00 |

The present search report has been drawn up for all claims

| Place of search | Date of completion of the search | Examiner |
|---|---|---|
| BERLIN | 22-10-1982 | LEMBLE Y.A.F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82